# EUROPEAN PATENT SPECIFICATION

(11) **EP 1 915 895 B1**
(45) Date of publication and mention of the grant of the patent: **13.10.2010**
(21) Application number: 07118992.2
(22) Date of filing: 22.10.2007
(51) Int. Cl.: A01C 23/00, B05B 1/26

(54) **Dispenser for dividing a main flow of a fluid into a number of partial fluids**
Ausgabevorrichtung zur Teilung eines Flüssigkeitshauptstroms in mehrere Teilströme
Distributeur pour la division d'un flux principal de liquide dans plusieurs fluides partiels

(30) Priority: 23.10.2006 DK 200601370
(43) Date of publication of application: 30.04.2008
(73) Proprietor: Sørensen, Harry Højvang, 6818 Årre (DK)
(72) Inventor: Sørensen, Harry Højvang, 6818 Årre (DK)
(74) Representative: Holme Patent A/S

(56) References cited:
- EP-A- 0 520 974
- EP-A- 0 638 227
- EP-A- 1 010 362
- DE-U1- 8 910 777
- GB-A- 2 251 166
- US-A- 4 114 815

## Description

The invention relates to a dispenser for dividing a main flow of a fluid into a number of sub flows and which comprises a dispenser house with a cap and two covers, at least one inlet opening formed into at least one of the covers and/or in the cap, a number of outlet openings for the sub flows formed substantially along at least one circle in at least one of the covers, at least one ring shaped knife, which with a first end face supports against the inside of one of the covers in an area about the at least one circle, a base that supports against the end second face of the knife, and which is designed with a central bearing housing, a bearing disc, which is rotatably embedded in the bearing housing, a motor for during operation rotating the bearing disc by an axle, which is eccentrically attached in the bearing disc and which is designed as the output shaft of the motor or as an axle which is firmly connected to this, so that the ring-shaped knife will describe eccentric movements on the circle of the outlet openings.

Such a dispenser is well suited for dispensing inhomogeneous liquids with contents of solids. An example might be liquid manure, which consists of excrements and urine from domestic animals such as e.g. cows and pigs.

Liquid manure is used to a great extent as fertilizer on cultivated fields. The liquid manure is driven to the fields in tanks, which are usually pulled by a tractor. A main flow of liquid manure is pumped from the tank to a dispenser, where the main flow is divided into sub flows, which leave the dispenser by the outlets of the dispenser, which each are connected by a hose to for instance an applicator shoe. The liquid manure is applied while the shoe is pulled in the upper layer of the field.

The consistence of the liquid manure causes that it is inclined to block the outlets to a larger or smaller extent, and especially if it contains solid components, such as e.g. straw.

Thus, the application capacity is reduced, and the spreading becomes uneven.

The dispenser is arranged in such a manner that the ring-shaped knife repeatedly is moved over the outlet openings in a predetermined pattern. Hereby solid components are cut into pieces and blocking of the outlet openings is prevented at least substantially.

Dispensers of this type are known from the applicant's European patent applications EP 1 656 822 A1 and EP 0638 227 A2 both included here as reference.

The dispenser houses of these known dispensers are divided into an air chamber and a fluid chamber. During the above-mentioned movements of the knife one or more of the outlet openings can be cut off from the fluid chamber, while the air chamber is simultaneously opened. Hereby the advantage is achieved that the fluid flow in the hoses, that are connected to these holes, continue under the influence of the air pressure in the air chamber and air, which might be in the hoses.

However, it is a disadvantage that it implies costs to produce the necessary amount of compressed air. In addition, the capacity of the dispenser is reduced, as the outlet openings only in limited cases have completely open flow space.

In some of the knife's positions some of the outlet openings can in turn communicate with both the air chamber and the fluid chamber, whereby the application of the liquid manure can become uneven.

The above mentioned drawbacks are remedied by the invention, by in a first aspect according to the invention to assign a type of dispenser as stated in the opening paragraph which has a large capacity in proportion to its size,
in a second aspect according to the invention to assign a type of dispenser as stated in the opening paragraph which is designed to divide the fluid in such a manner that it leaves the dispenser in even sub flows,
in a third aspect according to the invention to assign a type of dispenser as stated in the opening paragraph which is designed to pump a given amount of fluid with less costs than hitherto knwon,
in a fourth aspect according to the invention to assign a type of dispenser as stated in the opening paragraph for distributing inhomogeneous fluids containing solids,
in a fifth aspect according to the invention to assign a type of dispenser as stated in the opening paragraph which is designed to prevent blocking of the outlet openings,
in a sixth aspect according to the invention to assign a type of dispenser as stated in the opening paragraph which has a reliable function,
in a seventh aspect according to the invention to assign a type of dispenser as stated in the opening paragraph which has a simple construction, and
in an eighth aspect according to the invention to assign a type of dispenser as stated in the opening paragraph which has a long service life.

The novel and unique whereby this is achieved according to the invention consists in that the base is designed with a number of passage openings, which are designed for flow of fluid and which are limited by the area by which the base supports the second end face of the knife.

Thus, the dispenser obtains a large capacity, as its outlet openings now can be fed with fluid, which can be distributed, from both sides. In addition, the distribution can take place with lower costs than is the case with air consuming dispensers and in such a manner that the fluid leaves the dispenser in even sub flows.

In a particularly suitable embodiment according to the invention, the base of the dispenser can comprise a support ring for supporting and fixating the knife, a hub forming the bearing housing, and a number of spokes that connect the hub to the support ring. Thereby, a strong base is obtained, which has a relative small mass and is thus easily and without large use of energy brought to repeatedly changeing direction of motion during operation. At the same time, a large opening for flow of fluid through the base is obtained.

The base is displaceably fitted in the dispenser house by e.g. a ball bearing or roller bearing on an eccentric, consisting of a bearing disc with an eccentrically placed axel, which is driven by a motor.

According to the invention, the bearing can be segregated from the fluid by partly a sealing ring, which extends between the hub of the base and the respective cover, partly a cover plate for closing the opening of the hub on the side facing the fluid. Thus, the fluid is prevented from contaminating the bearing, which thereby can obtain a long service life and impart a dependable function to the dispenser.

The protection of the bearing against becoming contaminated by the fluid can according to the invention effectively be secured by placing a ring-shaped springy packing between the sealing ring and the cover.

During operation the knife is displaced by the base repeatedly over a line of outlet openings, which are distributed along a circle, under which solids, that might follow with the fluid, are cut in pieces, thus avoiding that the outlet openings are blocked. To each line of outlet openings distributed along a circle belongs a knife.

In a simple embodiment, the dispenser according to the invention can have a number of outlet openings with belonging knives in the same cover.

A larger capacity can according to the invention be obtained by using one or more lines of outlet openings with belonging knives in the cover.

An even larger capacity can according to the invention be obtained by placing a line of outlet openings and belonging knives in both covers.

In the latter instance the deposited base can serve to support the knives for the outlet openings in one of the covers, while according to the invention a separate support ring for the knives for the outlet openings can be formed in the second cover. The central opening of the separate support ring allows for the main flow of fluid to flow unobstructed into the dispenser house.

The separate support ring can according to the invention then be firmly connected to the embedded support ring by carriers for bringing the support ring to follow the embedded support ring's movements during operation.

When a knife is repeatedly brought over a line of outlet openings in a cover, wear occurs on both the knife and the cover.

According to the invention, the knife can thus be equipped with an exchangeable wearing plate, while similarly an exchangeable wearing ring can be placed in an area over the outlet openings, as the wearing ring is then designed with continuous holes, which flush with the outlet holes in the cover.

The fluid pressure affects the embedded base and the separate support ring with forces, which are directed towards the respective covers.

According to the invention, the dispenser can additionally be equipped with a spring arrangement for affecting the embedded base and the separate støtte ring with forces directed towards the respective covers.

The invention will be described in more detail below, referring to only exemplary embodiments of the dispenser and further advantageous characteristics and advantages are indicated with reference to the accompanying drawing, where
Fig. 1 shows, seen in an axial section view, of a dispenser according to the invention with one single line of outlet openings,
Fig. 2 shows, seen in an an axial section view of a second embodiment of a dispenser according to the invention,
Fig. 3 shows a sectional view taken along the line III-III in fig. 1,
Fig. 4 shows the same but with to lines of outlet openings,
Fig. 5 shows, in a schematic view a middle phase of the in fig. 3 shown dispenser where some of the parts have been removed,
Fig. 6 shows the same in one outer phase, and
Fig. 7 shows the same in a second outer phase.

In the following it is assumed that the dispenser is for dividing liquid manure, which in a main flow is fed to the dispenser from a manure tank, and which in a number of partial fluids must be applied to the soil of a cultivated field, while the tank is driving or being pulled across the field.

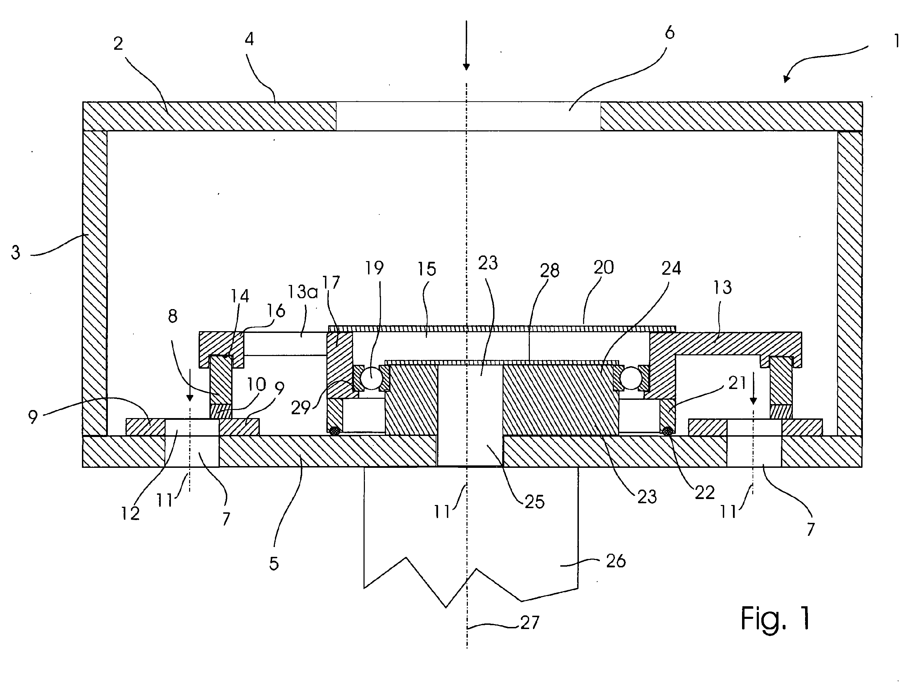

Fig. 1 shows in an axial section view of a first embodiment of a dispenser according to the invention.
The dispenser, which is designated generally by the reference numeral 1 -, comprises a dispenser house 2 with a cap 3 and one, seen in the fig., upper and lower cover 4 and 5. In the upper cover 4 an inlet opening 6 is formed, which by a line (not shown) is connected to the manure tank (not shown).

In the lower cover 5 a number of outlet openings 7 are formed, which by other lines (not shown) are connected to an applicator shoe each (not shown) for applying the liquid manure to the soil of the field.

In the dispenser house 2 a ring-shaped knife 8 is positioned, which by a wearing ring 9 supports against the lower cover 5. The wearing ring is exchangeably fitted to the cover and can thus be replaced when needed. The knife is furthermore equipped with an exchangeable wearing plate 10, which also can be replaced when needed.

The outlet openings 7 are positioned in a line along a circle 1. In the wearing ring 9 a line of openings 12 is formed, which flush with the openings 7 in the cover 5.

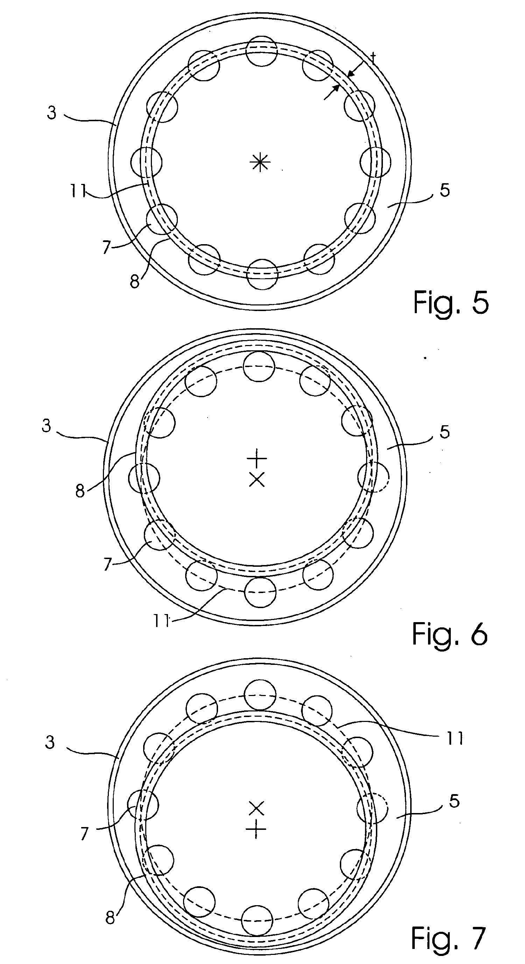

The dispenser is designed in such a manner that the knife 8 during operation is displaced repeatedly across the outlet openings 7 in eccentric elapsing movements. This is illustrated further in fig. 5, 6 and 7.

In fig. 5 the knife is in a center position with respect to the outlet openings. The center Cₖ of the ring-shaped knife 8 coincides with the center C_{c} of the circle 11.

In fig. 6 the knife, seen in the fig., is pushed upwards, whereby the radial inside of the knife is pushed past the upper outlet opening U_{ø}, while the radial exterior of the knife is pushed past the lover outlet opening Uₙ.

In fig. 7 the knife is pushed the opposite way, whereby the radial inside of the knife is pushed past the lower outlet opening Uₙ, while the radial exterior of the knife is pushed past the upper outlet opening U_{ø}.

As mentioned, the knife is brought in eccentric movements across the line of outlet openings. Thereby the knife is displaced in sequence repeatedly forwards and backwards over each outlet opening.

The inner and outer diameter of the knife as well as the size of amplitude of the eccentric movement is according to the invention adjusted so with respect to the diameter of the outlet openings, that these are passed reciprocatingly by both edges on the axial sides of the knife, which are facing the outlet openings.

Thus, possible solid components, such as e.g. straw in the liquid manure, are cut into pieces, which prevents the outlet openings from being blocked.

The knife is abutted against the cover 5 or the wearing ring 9 by a base 13 with a recess 14 for fixating the knife in relation to the base. The base defines furthermore bearing housing 15.

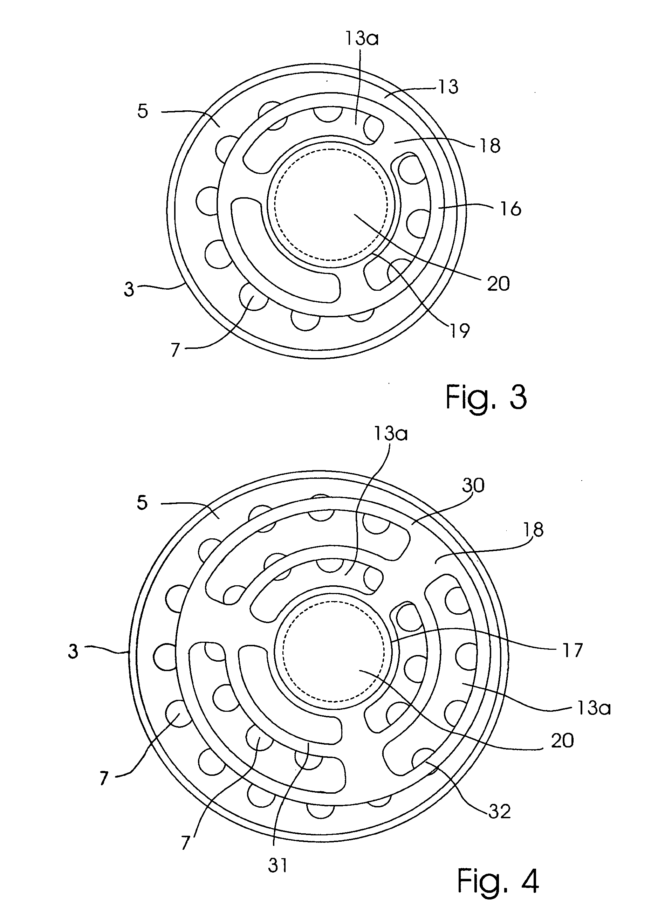

As is best seen in fig. 3 the base 13 comprises a support ring 16 for supporting and fixating the knife (not shown in the fig.), a hub 17 with the bearing housing 15, and three spokes 18, which connect the hub to the support ring. The recess 14 for fixating the knife is formed in the backup ring. Thus, large passage openings for the liquid manure are formed.

As shown in fig. 1, a ball bearing 19 is fitted in the bearing housing 15. A cover plate 20 over the bearing housing serves together with a sealing ring 21, which extends between the hub and the cover, as sealing the bearing housing against penetration of liquid manure, which might generate a damaging friction during operation and damage the ball bearing.

An elastic packing 22 ensures a continuous effective sealing between the sealing ring and the cover.

The ball bearing 19 is fitted to an eccentric 23 in the shape of a bearing disc 24 with an eccentrically fastened axle 25, which during operation is rotated by an only partly shown motor 26 about an axis of rotation 27.

The ball bearing is retained on the bearing disc 24 by a locking plate 28 and in the bearing housing 18 by an inward-pointing breast 29.

As mentioned, the axle 25 is eccentrically fastened in the bearing disc 24. The circle 11 of the outlet openings is furthermore concentric to the axis of rotation of the axle 25.

This geometry entails that the base 13 and thus the circular knife 8 will describe eccentric movements over the circle of the outlet openings 7 mentioned above with reference to fig. 5 - 7.

Fig. 4 shows a second embodiment of a dispenser according to the invention. This embodiment corresponds substantially to the one shown in fig. 3, and consequently, same reference numbers are used for identical parts.

In this case there are two lines of outlet openings 7 with matching knives (not shown in the fig.), and the base 30 comprises two support rings 31 and 32 for supporting and fixating the two knives. Three spokes 18 connect the hub 28 to the two support rings 31 and 32.

The embodiment shown in fig. 4 has a significantly larger capacity than the one shown in fig. 3. An additional increase in capacity can be obtained by using more lines of outlet openings and belonging more knives and support rings for supporting the knives.

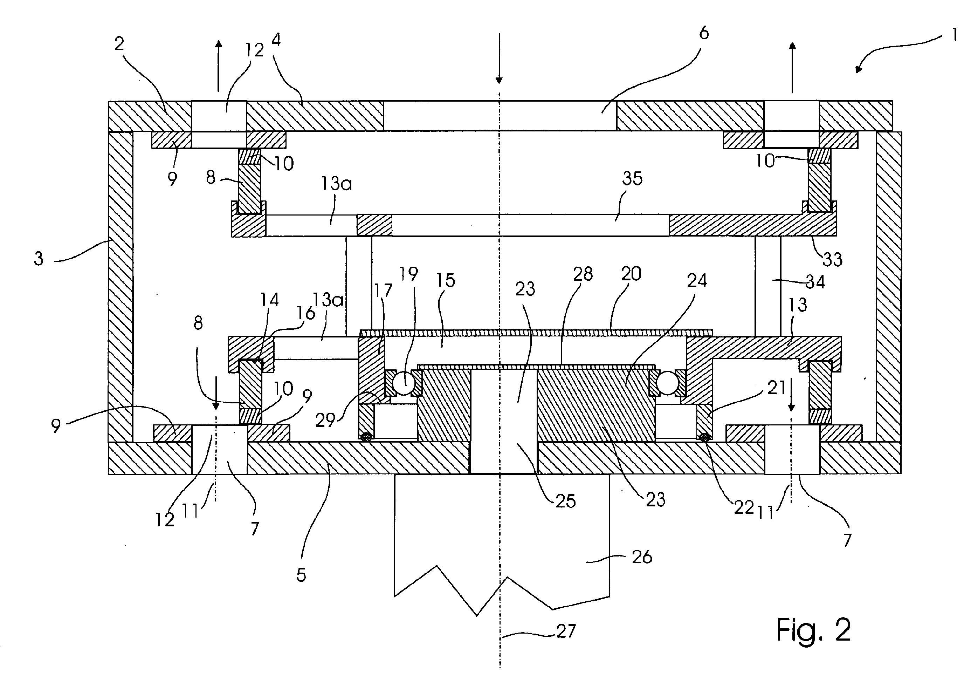

Fig. 2 is a third embodiment of a dispenser according to the invention. This embodiment corresponds substantially to the one shown in fig. 1, and consequently, same reference numbers are used for identical parts.

In this case it is designed as a line of outlet openings 7 with belonging knives 8 in both covers 4 and 5.

The lower knives 8, seen in the fig., are supported in the same manner as shown in fig. 1, while the upper knives 8 are supported by a separate support ring 33, which is connected to the lower base 13 by carriers 34 in order to bring the upper support ring 33 to follow the movements of the lower base 13 during operation.

The central opening 35 in the hub of the support ring 33 allows the liquid manure unobstructed to flow into the dispenser house through its inlet opening 6. The carriers 34 are furthermore of such a length, that the space between the base 13 and the support ring 33 becomes adequate for the liquid manure can reach all the outlet openings uniformly without difficulty.

The embodiment shown in fig. 2 has a considerably larger capacity than the one shown in fig. 1. A further increase of the capacity can be obtained by using more lines of outlet openings in both covers and belonging more knives and support rings for supporting the knives.

The liquid manure is pumped through under a pressure, which influence the base 13 by a force, which is directed at the cover 5, and which contributes to keeping the knives abutted against the cover.

In addition to this, the dispenser can have a spring arrangement (not shown) for keeping the knives abutted against the respective covers.

The dispenser according to the invention is shown in the drawing and described above on the basis of that the fluid, which was to be distributed was liquid manure.

The dispenser can be used to distribute many other fluids. The dispenser is especially advantageous for distributing inhomogeneous fluids with a content of solids.

It is furthermore indicated, that the main flow of liquid manure is lead into through the opening 6 in the cover 4. The main flow can alternatively be led into the dispenser house through one or more openings in its cap.

In the cap may further be openings for leading rinsing water into the dispenser house.

## Claims

1. Dispenser (1) for dividing a main flow of a fluid into a number of sub flows, and which comprises a dispenser house (2) with a cap (3) and two covers (4,5), at least one inlet opening (6) formed in at least one of the covers (4,5) and/or in the cap (3), a number of outlet openings (7) for the sub flows formed substantially along at least one circle (11) in at least one of the covers (4,5), at least one non-shaped knife (8), which with a first end face supports against the inside of one of the covers (4, 5) in an area around the at least one circle, a base (13), that supports against the second end face of the knife (8), and which is designed with a central bearing housing (15), a bearing disc (24), which is rotatably embedded in the bearing housing (15), a motor (26) for during operation rotating the bearing disc (24) by an axle (25), which is eccentrically attached in the bearing disc and which is designed as the output shaft of the motor (26) or as an axle which is firmly connected to this, so that the ring-shaped knife will describe eccentric movements on the circle of the outlet openings, **characterized in that** the base (13) is designed with a number of passage openings (13a), which are arranged for flow of fluid, and which are limited by the area by which the base supports the second end face of the knife (8).

2. Dispenser (1) according to claim 1, **characterized in that** the base (13) comprises a support ring (16) for supporting and fixating the knife (8), a hub (17) which forms the bearing housing (15), and a number of spokes (18), that connect the hub (17) to the suport ring (16).

3. Dispenser (1) according to claim 2, **characterized in that** the opening of the hub (17) is closed on the against the fluid facing side of a cover plate (20).

4. Dispenser (1) according to claims 2 or 3, **characterized in that** the dispenser (1) comprises a sealing ring (21), which extends between the hub (17) of the base (13) and the cover (5).

5. Dispenser (1) according to claim 4, **characterized in that** a circular springy packing (22) is placed between the sealing ring (21) and the cover (5).

6. Dispenser (1) according to any of the preceding claims 1 - 5, **characterized in that** a number of outlet openings (7) are formed for sub flows along two or more circles (11) in at least one cover (4,5).

7. Dispenser (1) according to any of the preceding claims 1 - 6, **characterized in that** a number of outlet openings (7) have been formed for sub flows along at least one circle (11) in both covers (4,5), and that one knife (8) exists for the sub flows (7) along the at least one circle (11) in both covers (4,5).

8. Dispenser according to claim 7, **characterized in that** the at least one knife (8) is supported by the embedded base (13), while the other knife (8) is supported by a separate support ring (16), which is fixatedly connected to the embedded support ring (33) by carriers (34) for bringing the support ring (16) to follow the movements of the embedded base (16) during operation.

9. Dispenser (1) according to any of the preceding claims 1 - 8, **characterized in that** each knife (8) is equipped with an exchangeable wearing plate (10).

10. Dispenser (1) according to any of the preceding claims 1 - 9, **characterized in that** the dispenser (1) is equipped with an exchangeable wearing ring (9) over the outlet holes (7) along each circle (10) in a cover (4,5), and that the wearing ring (9) is formed with continuous holes (12), which flush with the outlet holes (7) in the cover (4,5).

11. Dispenser (1) according to any of the preceding claims 1 - 10, **characterized in that** the dispenser comprises at least one spring arrangement for together with the fluid pressure to influence the base (13) with a towards the at the cover directed force (5).

## Patentansprüche

1. Ausgabevorrichtung zur Teilung eines Flüssigkeitshauptstromes in mehrere Teilströme, und umfassend : ein Ausgabevorrichtungsgehäuse (2) mit einer Kappe (3), sowie zwei Abdeckungen (4, 5), wobei mindestens eine Einlassöffnung (6) in mindestens einer der Abdeckungen (4, 5) und/oder in der Kappe (3) gebildet ist, und
eine Anzahl von Auslassöffnungen (7) für die Teilströme, die im wesentlichen entlang eines Kreises (11) in wenigstens einer der Abdeckungen (4, 5) gebildet sind,
wenigstens ein ringförmiges Messer (8), das sich mit einer ersten Seite an der Innenseite einer der Abdeckungen (4, 5) in einer Fläche um den wenigstens einen Kreis abstützt,
eine Basis (13), die gegen eine zweite Seite des Messers (8) anliegt, und die mit einem zentralen Lagergehäuse (15) versehen ist,
einer Lagerscheibe (24), die in dem Lagergehäuse (15) verdrehlich eingebettet ist,
einem Motor (26), um die Lagerscheibe (24) um eine exzentrisch in der Lagerscheibe angeordnete Achse (25) während des Betriebs zu drehen, wobei diese dazu ausgelegt ist, als Ausgabewelle des Motors (26) oder als eine fest mit dieser verbundene Achse zu fungieren, so dass das ringförmige Messer exzentrische Bewegungen über den Kreis der Auslassöffnungen beschreibt, **dadurch gekennzeichnet, dass**
die Basis (13) mit einer Anzahl von Durchlassöffnungen (13a) versehen ist, die für den Durchfluss von Flüssigkeit vorgesehen sind und die durch die Fläche begrenzt sind, mit der die Basis die zweite Seite des Messers (8) unterstützt.

2. Ausgabevorrichtung (1) nach Anspruch 1, **dadurch gekennzeichnet, dass** die Basis (13) einen Unterstützungsring (16) zum Unterstützen und Befestigen des Messers (8), eine Nabe (17), die das Lagergehäuse (15) bildet und eine Anzahl von Speichen (18) aufweist, die die Nabe (17) mit dem Unterstützungsring (16) verbinden.

3. Ausgabevorrichtung nach Anspruch 2, **dadurch gekennzeichnet, dass** die Öffnung der Nabe (17) an der der Flüssigkeit zugewandten Seite einer Abdeckplatte (20) geschlossen ist.

4. Ausgabevorrichtung (1) nach Ansprüchen 2 oder 3, **dadurch gekennzeichnet, dass** die Ausgabevorrichtung (1) einen Abdichtring (21) umfasst, der sich zwischen der Nabe (17), der Basis (13) und der Abdeckung (5) erstreckt.

5. Ausgabevorrichtung nach Anspruch 4, **dadurch gekennzeichnet, dass** eine kreisförmige federnde Packung (22) zwischen dem Dichtungsring (21) und der Abdeckung (5) angeordnet ist.

6. Ausgabevorrichtung (1) nach einem der vorangehenden Ansprüche 1 - 5, **dadurch gekennzeichnet, dass** eine Anzahl von Auslassöffnungen (7) für die Teilströme entlang zweier oder mehrerer Kreise (11) in der wenigstens einen Abdeckung (4, 5) gebildet sind.

7. Ausgabevorrichtung (1) nach einem der vorangehenden Ansprüche 1 - 6, **dadurch gekennzeichnet, dass** eine Anzahl von Auslassöffnungen (7) für die Teilströme entlang wenigstens eines Kreises (11) in beiden Abdeckungen (4, 5) gebildet sind, und dass ein Messer (8) für die Teilströme (7) entlang des wenigstens einen Kreises (11) in beiden Abdeckungen (4, 5) vorgesehen ist.

8. Ausgabevorrichtung nach Anspruch 7, **dadurch gekennzeichnet, dass** das wenigstens eine Messer (8) durch die eingebettete Basis (13) unterstützt ist, während das andere Messer (8) durch einen separaten Unterstützungsring (16) unterstützt ist, der an dem eingebetteten Unterstützungsring (33) durch Träger (34) gekoppelt ist um dem Unterstützungsring (16) die Bewegungen der eingebetteten Basis (16) während des Betriebs zu vermitteln.

9. Ausgabevorrichtung (1) nach einem der vorangehenden Ansprüche 1 - 8, **dadurch gekennzeichnet, dass** jedes Messer (8) mit einer austauschbaren Abnutzplatte (10) versehen ist.

10. Ausgabevorrichtung (1) nach einem der vorangehenden Ansprüche 1 - 9, **dadurch gekennzeichnet, dass** in die Ausgabevorrichtung (1) mit einem austauschbaren Abnutzring (9) über den Auslasslöchern (7) entlang jedes Kreises (10) in einer Abdeckung (4,5), und dass der Abnutzring (9) mit durchgehenden Löchern (12) versehen ist, die mit den Auslasslöchern (7) in der Abdeckung (4, 5) fluchten.

11. Ausgabevorrichtung (11) nach einem der vorangehenden Ansprüche 1-10, **dadurch gekennzeichnet, dass** die Ausgabevorrichtung wenigstens eine Federanordnung umfasst, um zusammen mit dem Flüssigkeitsdruck die Basis (13) mit einer auf die Abdeckung (5) gerichteten Kraft zu belasten.

## Revendications

1. Distributeur (1) pour la division d'un flux principal d'un fluide dans plusieurs flux partiels, et qui comprend un logement de distributeur (2) avec un capuchon (3) et deux couvertures (4,5), au moins une ouverture d'admission (6) formée dans au moins une des couvertures (4,5) et/ou dans le capuchon (3), un nombre de passages d'évacuation (7) pour les flux partiels formés substantiellement le long d'au moins un cercle (11) dans au moins une des couvertures (4,5), au moins un couteau (8) annulaire, qui avec une première face d'extrémité supporte contre l'intérieur d'une des couvertures (4,5) dans une zone autour d'au moins un cercle, une base (13), qui supporte contre la deuxième face d'extrémité du couteau (8) et qui est conçue avec un logement de palier central (15), un palier de disque (24), qui est intégré de manière rotatoire dans le logement de palier (15), un moteur (26) pour faire roter le palier de disque pendant l'opération (24) à l'aide d'un axe (25) qui est attaché excentriquement dans le palier de disque et qui est conçu comme l'arbre de sortie du moteur (26) ou comme un axe qui est solidement attaché à ceci, ainsi que le couteau annulaire vont décrire des mouvements excentriques sur le cercle des passages d'évacuation, **caractérisée en ce que** la base (13) est conçue avec un nombre de passages d'admission (13a), qui sont arrangés pour flux de fluide et qui sont limités par la zone, à l'aide de laquelle la base supporte la deuxième face d'extrémité du couteau (8).

2. Distributeur (1) selon la revendication 1, **caractérisée en ce que** la base (13) comprend un support annulaire (16) pour soutenir et fixer le couteau (8), un moyeu (17) qui forme le logement de palier (15), et un nombre de rayons de roue (18) qui relient le moyeu (17) au support annulaire (16).

3. Distributeur (1) selon la revendication 2, **caractérisée en ce que** l'ouverture du moyeu (17) est fermée du côté face au fluide d'un couvercle (20).

4. Distributeur (1) selon les revendications 2 ou 3, **caractérisée en ce que** le distributeur (1) comprend une couronne d'étanchéité (21), qui s'étend entre le moyeu (17) de la base (13) et la couverture (5).

5. Distributeur (1) selon la revendication 4, **caractérisée en ce qu'**un joint élastique circulaire (22) est placé entre la couronne d'étanchéité (21) et la couverture (5).

6. Distributeur (1) selon l'une quelconque des revendications précédentes 1 à 5, **caractérisée en ce qu'**un nombre de passages d'évacuation (7) sont formés pour les flux partiels le long de deux ou plus de cercles (11) dans au moins une couverture (4,5).

7. Distributeur (1) selon l'une quelconque des revendications précédentes 1 à 6, **caractérisée en ce qu'**un nombre de passages d'évacuation (7) ont été formés pour les flux partiels le long d'au moins un cercle (11) dans chaque couverture (4,5) et qu'un couteau (8) existe pour les flux partiels (7) le long d'au moins un cercle (11) dans toutes les deux couvertures (4,5).

8. Distributeur selon la revendication 7, **caractérisée en ce qu'**au moins un couteau (8) est supporté à l'aide de la base intégrée (13), pendant que l'autre couteau (8) est supporté par une couronne annulaire séparée (16), qui est connectée de manière fixe à la couronne de support intégrée (33) à l'aide d'entraîneurs (34) pour que le support annulaire (16) suive les mouvement de la base intégrée (16) pendant l'opération.

9. Distributeur (1) selon l'une quelconque des revendications précédentes 1 à 8, **caractérisée en ce que** chaque couteau (8) est équipé d'un plaque d'usure changeable (10).

10. Distributeur (1) selon l'une quelconque des revendications précédentes 1 à 9, **caractérisée en ce que** le distributeur (1) est équipé avec une couronne d'usure (9) changeable en dessus des trous d'évacuation (7) le long de chaque cercle (10) dans une couverture (4,5), et que la couronne d'usure (9) est formé avec des trous continus (12), qui jaillissent avec les trous d'évacuation (7) dans la couverture (4,5).

11. Distributeur (1) selon l'une quelconque des revendications précédentes 1 à 10, **caractérisée en ce que** le distributeur comprend au moins un arrangement de ressort pour influer la base (13) avec la pression de fluide avec une force (5) dirigée contre la couverture.
